# EUROPEAN PATENT SPECIFICATION

(11) **EP 4 507 967 B1**
(45) Date of publication and mention of the grant of the patent: **25.06.2025**
(21) Application number: 23754463.0
(22) Date of filing: 23.06.2023
(51) Int. Cl.: B64U 80/20, B64U 50/39, B64U 70/97, B64U 80/25, B64U 80/30

(54) **AUTONOMOUS UAV SERVICE STATION FOR THE SUPPORT OF BVLOS UAVS AND METHOD OF ITS OPERATION**
AUTONOME UAV-DIENSTSTATION ZUR UNTERSTÜTZUNG VON BVLOS UAVS UND VERFAHREN ZU DEREN BETRIEB
STATION DE SERVICE D'UAV AUTONOME POUR LE SUPPORT D'UAVS BVLOS ET SON PROCÉDÉ DE FONCTIONNEMENT

(43) Date of publication of application: 19.02.2025
(73) Proprietor: GLOBESY, s.r.o., 010 01 Zilina (SK)
(72) Inventor: MICKO, Stefan, 010 15 Zilina (SK); VANCO, Denis, 974 01 Banská Bystrica (SK); RYS, Marcel, 974 01 Banská Bystrica (SK)
(74) Representative: Cechvalova, Dagmar
(86) International application number: PCT/SK2023/050019
(87) International publication number: WO 2024/263107

(56) References cited:
- CN-B- 113 276 725
- KR-B1- 101 705 838
- KR-B1- 102 356 575
- TR-A2- 2021 021 976
- US-B2- 10 369 975

## Description

### Field of the invention

The invention relates to construction of the autonomous UAV service station for support of BVLOS infrastructure of the autonomous flights, and to method of its operation. The invention falls into the field of aviation.

### Background of the invention

Conventional drones (hereafter also referred to as UAVs, unmanned aerial vehicles, UAVs) have a limited flight time, as their battery life is often limited to a few tens of minutes. When the battery runs down, UAV must land, and the user must replace or recharge the discharged battery to make UAV operational again.

The need for frequent user interaction in the maintenance and battery replacement of one or more UAVs is not appropriate or possible where prolonged operating times are required or where prolonged autonomous operation is required for UAV.

Document US2021/0047055A1 describes the station that enables precision landing of UAV and that is arranged in such a way that it is capable to prevent the collision of the unmanned UAV with the station during landing.

The described station includes the covering components to cover UAV when UAV is in interior space and landing area in the form of landing stand coupled to lift. At the moment UAV approaches the landing station, the covering portions are opened, and the lift coupled with the landing stand moves upwards. After UAV has landed safely on the landing stand, the lift will move downwards and at the same time the covering parts will close in order to cover UAV.

The above-mentioned document US2021/0047055A1 describes the solution that results in the precise and safe landing of UAV by means of landing area structure consisting of landing stand functionally connected to lift, which serves to transport UAV after landing to the interior of station.

The above-mentioned document provides the station that includes the lift that transports UAV, after landing, to the interior of station where it is safely garaged. The document further provides that the problem of low battery capacity and the associated short flight range of UAV is usually solved by landing UAV and being moved to another location by external transport means. Document US2021/0047055A1 does not disclose that the described station would allow battery charging or replacement, which is a key issue related to UAV operation.

Similarly, document US2021/0047055A1 does not describe how to provide a more universal infrastructure to enable the use of UAVs for different types of tasks, by means of automation of payload exchange.

The patent publication CN113276725B describes a power exchange station with battery replacement facility. The Korean patent KR101705838B1 discloses an automatic battery exchange system for drones. The US patent US10369975B2 discloses UAV base station. The patent publication TR2021021976A2 disclose an automatic battery change system for UAV and the Korean document KR102356575B1 describes a multi drone station.

The present invention eliminates the above-mentioned problem related to UAV operation by providing the autonomous service station to support UAV charging and BVLOS (Beyond Visual Line of Sight) infrastructure of the autonomous flights and the method of its operation.

### Summary of the invention

An autonomous UAV service station is defined in claim 1. A method of operation of the autonomous UAV service station is defined in claim 4.

In particular to achieve optimization of efficient operation of UAVs in the case of autonomous flights without direct visual contact (BVLOS), the autonomous UAV service station has been designed to support BVLOS infrastructure of the autonomous flights, namely for support of UAV battery charging, and the method of its operation according to invention, which in its essence is formed by the components described below. It is multi-storey framed skeleton with full upper storey, on one side of which is placed the mechanical self-guided landing/take-off module "toboggan" with dimensions approximately 60x60x60cm, into which the autonomous UAV lands so that it is accurately guided to the module by means of this module and fits into a designated place at its bottom part.

The self-guided landing/take-off module is preferably formed by two pyramids, each two edges of which are in contact with the respective arm of UAV when UAV is descending, thereby centres UAV in the x and y axis at the designated location by means of its own gravity. On the other side of the upper storey of the multi-storey framed skeleton, the multi-storey actuator horizontal extending/retracting module is located.

The framed skeleton preferably consists of coupled horizontal and vertical peripheral profiles with fastening points for variable fixing of the horizontal partitions. The framed skeleton preferably has solid bottom and/or rolling wheels, depending on the characteristics of the operational deployment of UAV, and the type of tasks to be performed with support of the autonomous service station.

In the case when the operational requirement for the autonomous service station is to replace only the battery on UAV, it is sufficient for the autonomous service station to have only a single-storey actuator horizontal extending/retracting module, according to an example not covered by the claims.

If the operational requirement for the autonomous service station is to replace the battery and another payload object such as the trolley, shipment, camera, etc. on UAV, it is sufficient for the autonomous service station to have the two-storey actuator horizontal extending/retracting module. Alternatively, if the operational requirement for the autonomous service station is to replace the battery and two other payload objects such as the trolley, shipment, camera, etc. on UAV, it is sufficient for the autonomous service station to have a three-storey actuator horizontal extending/retracting module.

On the upper storey, a vertical lift shaft is located between the mechanical self-guided landing/take-off module and the multi-storey actuator horizontal extending/retracting module, pointing below the upper storey of the multi-storey framed skeleton. The multi-storey lift is located in the vertical lift shaft. The travel rise of the multi-storey lift extends beyond the upper storey of the multi-storey framed skeleton.

The control of the multi-storey lift up and down in the Z-axis is provided by step motor. The arrangement in which the multi-storey framed skeleton has open stowage boxes underneath the mechanical self-guided landing/take-off module for storing replaced parts for payload objects such as the trolley, shipment, camera, etc. is advantageous. It is also given the possibility, that the battery stowage boxes for battery storage would be connected to battery charger.

Then, it is preferable that the two-storey actuator horizontal stacking extending/retracting module is positioned below the upper storey of the multi-storey framed skeleton at the level of the multi-storey actuator horizontal stacking extending/retracting module. Preferably, one actuator horizontal extending/retracting module is dedicated to battery replacement. In such case, the second actuator horizontal extending/retracting module is preferably intended to replace a functional component, e.g., the camera of UAV, or to connect another payload object of trolley, shipment. Beneath the upper storey of the multi-storey framed skeleton at the level of the multi-storey actuator horizontal extending/retracting module, it is possible to advantageously place a power source such as the battery or electrical generator.

In the autonomous UAV service station for support of BVLOS infrastructure of the autonomous flights, the multi-storey lift has empty storeys and, during operation, conveniently also has storeys with stored spare components such as the battery, trolley, shipment, and camera.

The autonomous UAV service station for support of BVLOS infrastructure of autonomous flights is advantageously arranged as the swapping system to swap batteries in the drone and connect the battery connector by means of servo motor, while presenting the robotic system controlled remotely from the control station.

The autonomous UAV service station for support of BVLOS infrastructure of the autonomous flights is extremely conveniently arranged as the swapping system for swapping payloads of various kinds (e.g., ortho camera, thermal camera, first aid package, autonomous vehicle) in the drone and possibly connecting their connector using the servo motor, which also represents the robotic system controlled remotely from the control station.

The autonomous UAV service station for support of BVLOS infrastructure of the autonomous flights preferably also has a communication unit and a battery charging block, where, after connecting the connector, the battery charging can be conveniently controlled from WAN via remote access, for example, by using the reading of the charging setup from a QR code on the battery set.

With the aid of the above-described autonomous UAV service station for support of BVLOS infrastructure of the autonomous flights, the method of operating the autonomous UAV service station for support of BVLOS infrastructure of the autonomous flights is advantageously realized.
- The initial step is the landing of UAV on the mechanical self-guided landing/take-off module between two pyramid structures, on the upper storey of the multi-storey framed skeleton.
- Subsequently, the battery swapping system for battery replacement in UAV will be in operation, where the first actuator horizontal extending/retracting module is activated, whose gripping end member ejects to the battery, grasps the battery, and in reverse straight-line motion, ejects the battery from the UAV and stores it in the free upper storey of the lift.

- The storey of lift with the newly charged battery is raised at the level of the selected battery in UAV by stroke of lift.
- Again, the first actuator horizontal extending/retracting module is activated, and its gripping end member extends to the battery, grips the battery, and in a forward, straight-line motion, retracts the battery from UAV where it connects to the connector. The end member of the first actuator horizontal extending/retracting module is then returned to its initial position by backward straight-line motion.
- Subsequently, the swapping system will be in operation for exchange of a payload of various kinds (e.g., ortho-camera, thermal camera, first aid package, autonomous vehicle).
- The lift storey is raised to the level of the payload area in UAV by vertical displacement of the lift, in which a payload of various kinds is stored (e.g., ortho-camera, thermal camera, first-aid package, autonomous vehicle) intended for attachment to UAV.
- Subsequently, the second actuator horizontal extending/retracting module is activated, whose gripping end member extends to the payload, grasps the payload, and retracts the payload from UAV in forward straight-line motion. Subsequently, the end member of the second actuator horizontal extending/retracting module is returned by backward straight-line motion to the initial position.
- Before departure, the locking mechanisms of UAV for batteries and payload are activated, the lift descends to the original level and UAV takes off.

After the UAV has departed, additional support steps can conveniently take place, intended for manipulation with the battery and payload, which have been left stored on the lift storeys. For these activities, it is advantageous if below the upper storey of the multi-storey framed skeleton, at the level of the multi-storey actuator horizontal extending/retracting module, the two-storey actuator horizontal stacking extending/retracting module is located.

Then the end members of the two-storey actuator horizontal stacking extending/retracting module are preferably used for moving the individual payloads and the battery from the individual lift storeys to the stowage boxes.

For the individual alternative implementations, one-storey actuator horizontal stacking extending/retracting module will be sufficient.

Among the advantages of construction of the autonomous UAV service station for support of BVLOS infrastructure of the autonomous flights and method of its operation according to invention belongs the increasing of range of flying ranges by allowing battery re-replacement and providing more universal infrastructure allowing the use of UAV for different types of tasks, by means of automation of a payload exchange.

It is also extremely advantageous to use multiple autonomous UAV service stations for creating more extensive infrastructure in the given area, covering a substantially larger area for long-term operation of UAVs in such area.

### Brief description of the drawings

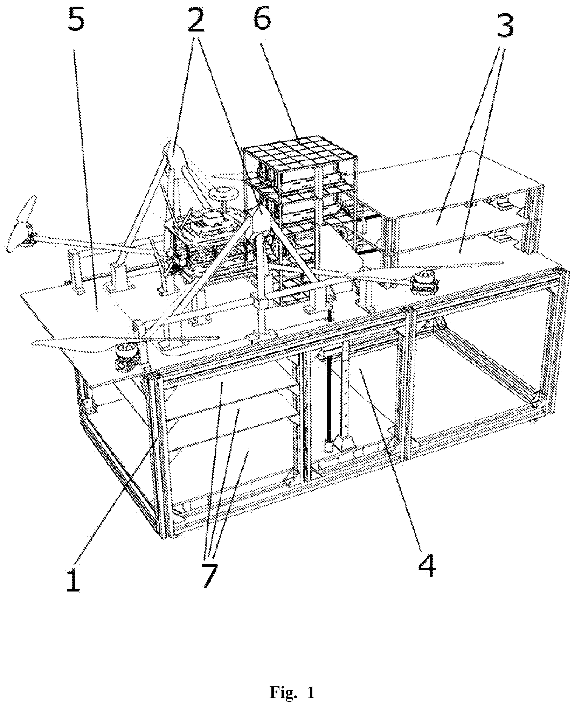

The autonomous UAV service station for support of BVLOS infrastructure of the autonomous flights according to invention will be further explained in the drawings, wherein
Figure 1 shows, in axonometric view, the autonomous UAV service station with lift storeys extended above the multi-storey framed skeleton.

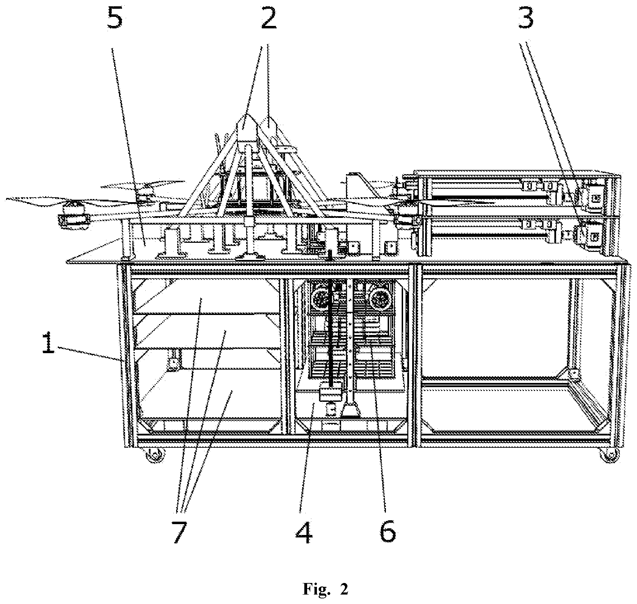

Figure 2 shows, in axonometric view, the autonomous UAV service station with lift storeys inserted under the multi-storey framed skeleton.

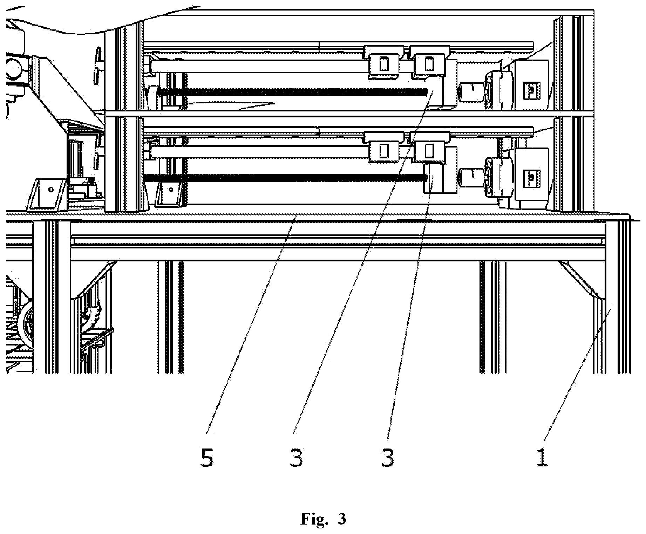

Figure 3 shows the detailed side view of the first and second actuator horizontal extending/retracting modules of the autonomous UAV service station.

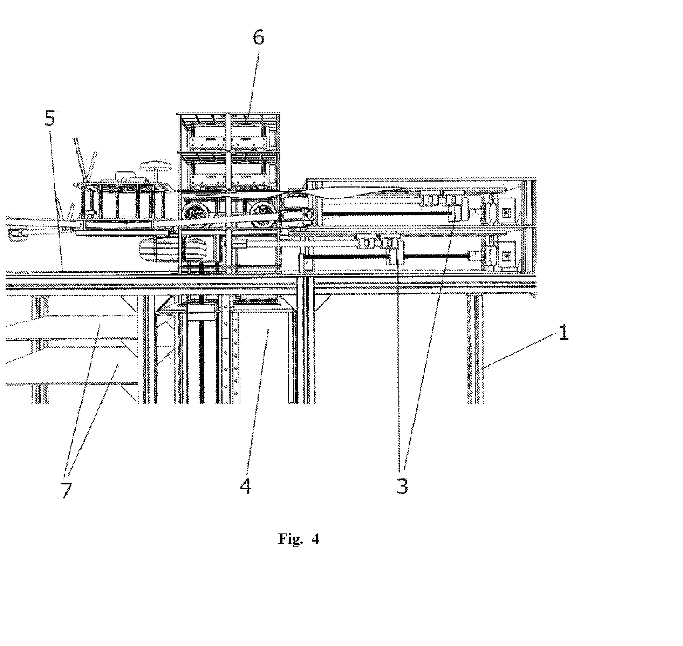

Figure 4 shows the autonomous UAV service station in the side view in the step of retracting of the payload under UAV.

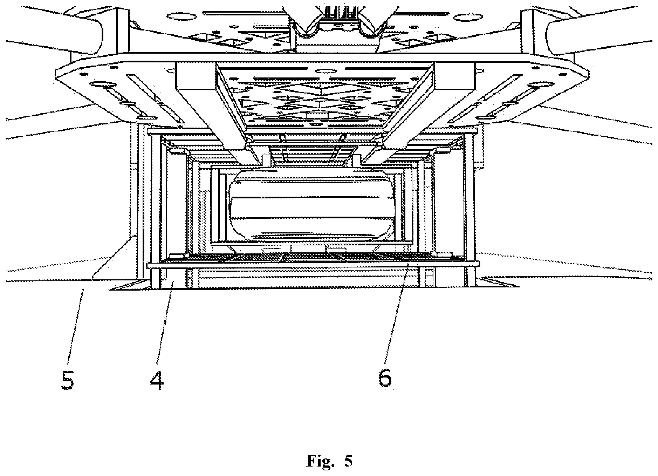

Figure 5 shows the side view of the autonomous UAV service station in the step of retracting of the payload under UAV.

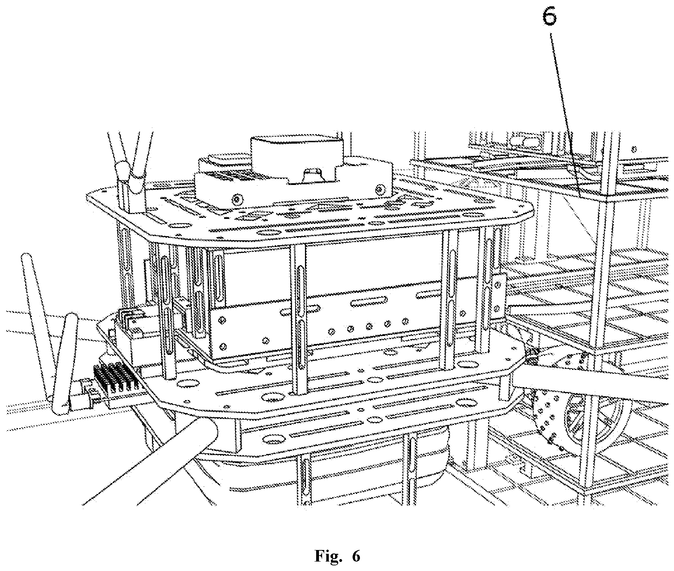

Figure 6 shows in axonometric detailed view depicted UAV with the battery loaded in the central part of UAV frame and attached under UAV.

### Examples of the embodiments

It is understood that the individual embodiments of the invention are presented for illustration and not as limitations of solutions.

### Example 1

In this example of the specific embodiment, the construction of the autonomous UAV service station for support of BVLOS infrastructure of the autonomous flights is described. In this example, the battery and payload exchange requirement is given for landing UAV. The basis of construction is the multi-storey framed skeleton 1 with full upper storey 5, on one side of which a mechanical self-guided landing/take-off module 2 "toboggan" with dimensions approximately 60x60x60cm is placed. The self-guided landing/take-off module 2 consists of two pyramids. The two-storey actuator horizontal extending/retracting module 3 is located on the other side of the upper storey 5 of the multi-storey framed skeleton 1. The framed skeleton 1 consists of coupled peripheral horizontal and vertical profiles with fastening points for variable attachment of the horizontal partitions. Framed skeleton 1 shall have the full bottom with possible mobile wheels.

On the upper storey 5, the vertical lift shaft 4 is provided between the mechanical self-guided landing/take-off module 2 and the two-storey actuator horizontal extending/retracting module 3, pointing below the upper storey 5 of the multi-storey framed skeleton 1. In the vertical lift shaft 4, the multi-storey lift 6 with step motor is located. The stroke of the multi-storey lift 6 exceeds beyond the upper storey 5 of the multi-storey framed skeleton 1.

In one alternative embodiment, not covered by the claims, if only the battery replacement requirement is given for the landing UAV, the autonomous service station has only one-storey actuator horizontal extending/retracting module 3.

In the second alternative embodiment, if the requirement is given for battery and for two payloads replacement for the landing UAVs, then the autonomous service station has a three-storey actuator horizontal extending/retracting module 3.

### Example 2

In this example of the specific embodiment, the construction of the autonomous UAV service station is described for support of BVLOS infrastructure of the autonomous flights with extended functionality. The basis is the construction sufficiently described in the previous example. The functional extension is that the multi-storey framed skeleton 1 has open stowage boxes 7 located underneath the mechanical self-guided landing/take-off module 2 for storing replaced parts for payload objects such as the trolley, shipment, camera, etc. The stowage boxes 7 for storing the battery are connected to the battery charger. Also, below the upper storey 5 of the multi-storey framed skeleton 1, at the level of the multi-storey actuator horizontal extending/retracting module 3, the two-storey actuator horizontal stacking extending/retracting module is located.

### Example 3

In this example of the specific embodiment, the method of operation of the autonomous UAV service station for support of BVLOS infrastructure of the autonomous flights according to invention is described. The initial step is the landing of UAV on the mechanical self-guided landing/take-off module 2 between two-pyramid constructions, on the upper storey 5 of the multi- storey framed skeleton 1.

Subsequently, the battery swapping system in UAV will be in operation, wherein the first actuator horizontal extending/retracting module is activated, and its gripping end member is extended to battery, grasps the battery, and in a reverse straight-line motion, ejects the battery from the UAV and stores it in the free upper storey of the lift 6.

The storey of lift with the new charged battery will be raised to the level of the selected battery in UAV by stroke of lift 6.

Again, the first actuator horizontal extending/retracting module is activated, and its gripping end member is extended to battery, grasps the battery, and in a forward, straight-line motion, ejects the battery from UAV where it connects to the connector. The end member of the first actuator horizontal extending/retracting module is then returned to its initial position by backward straight-line motion.

Subsequently, a swapping system will be in operation to exchange payload of various kinds e.g., ortho camera, thermal camera, first aid package, autonomous vehicle.

A lift storey is lifted to the level of the payload area in UAV by horizontal displacement of lift 6, in which the payload of various kinds is stored e.g., ortho camera, thermal camera, first aid package, autonomous vehicle dedicated for attachment to UAV.

Subsequently, the second actuator horizontal extending/retracting module 3 is activated, the gripping end member of which extends to payload, grasps the payload, and ejects the payload from UAV in a forward straight-line motion. Subsequently, the end member of the second actuator horizontal extending/retracting module is returned by backward straight-line motion to the initial position.

Prior to departure, the locking mechanisms of UAV battery and payload are activated, lift 6 descends to the original level and UAV takes off.

### Example 4

In this example of the specific embodiment, the enhanced method of operation of the autonomous UAV service station for support of BVLOS infrastructure of the autonomous flights according to invention is described.

After departure of UAV can conveniently proceed further supporting steps, dedicated for manipulation with the battery and payload that remained stored on the lift storeys. However, these activities assume that below the upper storey 5 of the multi-storey framed skeleton 1 at the level of the multi-storey actuator horizontal extending/retracting module 3, the two-storey actuator horizontal stacking extending/retracting module is located. Then, by means of the end members of the two-storey actuator horizontal stacking extending/retracting module, the individual payloads and battery are moved from the individual lift storeys to the stowage boxes 7.

### Industrial applicability

Autonomous UAV service station for support of BVLOS infrastructure of the autonomous flights and the method of its operation according to invention is applicable in aviation.

### List of reference

- 1: framed skeleton
- 2: landing/take-off module
- 3: extending/retracting module
- 4: lift shaft
- 5: upper storey
- 6: lift
- 7: stowage box

## Claims

1. Autonomous UAV service station for support of Beyond Visual Line of Sight - BVLOS - infrastructure of autonomous flights, comprising:
- a multi-storey framed skeleton (1),
- a mechanical self-guided landing/take-off module (2) located on an upper storey (5) of the multi-storey framed skeleton (1),
- a vertical lift shaft (4) placed between the mechanical self-guided landing/take-off module (2) and an actuator horizontal extending/retracting module (3) ) located on the upper storey (5) of the multi-storey framed skeleton,
- a multi-storey lift (6) placed in the vertical lift shaft (4),
- wherein a stroke of the multi-storey lift (6) exceeds the upper storey (5) of the multi-storey framed skeleton (1),
- wherein the multi-storey framed skeleton (1) has open stowage boxes (7) located underneath the mechanical self-guided landing/take-off module (2),
**characterized in that:**
- the actuator horizontal extending/retracting module (3) is a two-storey one, with two actuator horizontal extending/retracting modules, each arranged on a corresponding storey, wherein one actuator horizontal extending/retracting module (3) is dedicated for battery replacement and the other actuator horizontal extending/retracting module (3) intended for manipulation of functional UAV component or payload object.

2. Autonomous UAV service station for support of BVLOS infrastructure of the autonomous flights according to claim 1, wherein the stowage boxes (7) are intended for stowing spare components and payload objects.

3. Autonomous UAV service station for support of BVLOS infrastructure of the autonomous flights according to claim 1, wherein the stowage boxes (7) for storing the battery are connected to battery charger.

4. A method of operation of the autonomous UAV service station for support of BVLOS infrastructure of the autonomous flights, the method being performed at the autonomous UAV service station according to any one of claims 1 to 3, such that:
- UAV lands on the mechanical self-guided landing/take-off module (2) on the upper storey (5) of the multi-storey framed skeleton (1);
- the first actuator horizontal extending/retracting module (3) retracts the battery from UAV and stores it in the free storey of lift (6).
- at the level of selected battery in UAV, the lift (6) raises the lift storey with the new battery;
- the first actuator orizontal extending/retracting module (3) inserts the battery into UAV;
- the second actuator horizontal extending/retracting module (3) inserts the payload into UAV;
- UAV locking mechanisms are activated;
- the lift (6) descends to the original level and UAV takes off.

## Patentansprüche

1. Eine autonome UAV-Service-Station zur Unterstützung der BVLOS-Infrastruktur (Flüge außerhalb der Sichtweite) für autonomes Fliegen, die Folgendes enthält:
- ein mehrstöckiges Rahmenskelett (1);
- ein mechanisches zielsuchendes Lande-/Aufstiegsmodul (2), das auf dem Obergeschoss (5) des mehrstöckigen Rahmenskeletts (1) platziert ist;
einen vertikalen Aufzugsschacht (4), platziert zwischen dem mechanischen zielsuchenden Lande-/Aufstiegsmodul (2) und dem horizontalen Aktuator-Auszieh-/Einschubmodul (3), das auf dem Obergeschoss (5) des mehrstöckigen Rahmenskeletts (1) platziert ist;
- einen mehrstöckigen Aufzug (6), der im vertikalen Aufzugsschacht (4) platziert ist; wobei der Hub des mehrstöckigen Aufzugs (6) das Obergeschoss (5) des mehrstöckigen Rahmenskeletts (1) überragt; wobei das mehrstöckige Rahmenskelett (1) über offene Ablageboxen (7) verfügt, die unter dem mechanischen zielsuchsenden Lande-/Aufstiegsmodul (2) platziert sind,
**dadurch gekennzeichnet, dass** das horizontale Aktuator-Auszieh-/Einschubmodul zweistöckig ist mit zwei horizontalen Auszieh-/Einschubmodulen, die auf dem entsprechenden Geschoss angeordnet sind, wobei ein horizontales Aktuator-Auszieh-/Einschubmodul (3) zum Batteriewechsel bestimmt ist und das andere horizontale Aktuator-Auszieh-/Einschubmodul zur Handhabung der funktionellen UAV-Komponente oder des Payload-Objekts bestimmt ist.

2. Eine autonome UAV-Service-Station zur Unterstützung der BVLOS-Infrastruktur für autonomes Fliegen nach Anspruch 1, wo die Ablageboxen (7) zum Ablegen von Ersatzkomponenten und Payload-Objekten bestimmt sind.

3. Eine autonome UAV-Service-Station zur Unterstützung der BVLOS-Infrastruktur für autonomes Fliegen nach Anspruch 1, wo die Ablageboxen (7) zum Ablegen von Batterien an das Batterieladegerät angeschlossen sind.

4. Die Betriebsweise der autonomen UAV-Service-Station zur Unterstützung der BVLOS-Infrastruktur für autonomes Fliegen, wobei diese Weise an der autonomen UAV-Service-Station nach irgendeinem der Ansprüche 1 bis 3 durchgeführt wird, so dass:
- ein UAV auf dem mechanischen zielsuchenden Lande-/Aufstiegsmodul (2) auf dem Obergeschoss (5) des mehrstöckigen Rahmenskeletts (1) landet;
- durch das erste horizontale Aktuator-Auszieh-/Einschubmodul (3) die Batterie aus dem UAV hinausgeschoben wird und auf ein freies Geschoss des Aufzugs (6) gelegt wird;
- auf die Höhe der ausgenommenen Batterie im UAV mit dem Aufzugshub (6) das Aufzugsgeschoss mit einer neuen Batterie angehoben wird;
- durch das erste horizontale Aktuator-Auszieh-/Einschubmodul (3) die Batterie ins UAV eingeschoben wird;
- durch das andere horizontale Aktuator-Auszieh-/Einschubmodul (3) Payload ins UAV eingeschoben wird;
- die Sicherungsmechanismen des UAVs aktiviert werden;
- der Aufzug (6) auf die ursprüngliche Höhe sinkt und das UAV aufsteigt.

## Revendications

1. La station de service autonome pour véhicules aériens sans pilote (UAV) destinée à supporter l'infrastructure de vols autonomes BVLOS (Beyond Visual Line of Sight), comprenant:
- une structure squelettique à plusieurs étages (1);
- un module mécanique d'atterrissage et de décollage à guidage automatique (2) disposé au niveau supérieur (5) de la structure squelettique à plusieurs étages (1);
- une gaine d'ascenseur verticale (4) disposée entre le module mécanique d'atterrissage et de décollage à guidage automatique (2) et un module actionneur d'extension et de rétraction horizontal (3) situé au niveau supérieur (5) de la structure squelettique à plusieurs étages (1);
- un ascenseur à plusieurs niveaux (6) installé dans la gaine d'ascenseur verticale (4), l'ascenseur à plusieurs niveaux (6) ayant une course dépassant le niveau supérieur (5) de la structure squelettique à plusieurs étages (1); ladite structure squelettique à plusieurs étages (1) comprenant des compartiments de rangement ouverts (7) situés sous le module mécanique d'atterrissage et de décollage à guidage automatique (2),
**caractérisée en ce que** le module actionneur d'extension et de rétraction horizontal est à deux niveaux avec deux modules actionneurs d'extension et de rétraction horizontaux disposés chacun à un niveau correspondant, l'un des modules actionneurs d'extension et de rétraction horizontaux (3) étant destiné au remplacement de la batterie et l'autre à la manipulation d'un composant fonctionnel de l'UAV ou d'un objet de charge utile (payload).

2. La station de service autonome pour véhicules aériens sans pilote (UAV) destinée à supporter l'infrastructure de vols autonomes BVLOS selon la revendication 1, **caractérisée en ce que** les compartiments de rangement ouverts (7) sont destinés au stockage de composants de rechange et d'objets de charge utile (payload).

3. La station de service autonome pour véhicules aériens sans pilote (UAV) destinée à supporter l'infrastructure de vols autonomes BVLOS selon la revendication 1, **caractérisée en ce que** les compartiments de rangement ouverts (7) destinés au dépôt des batteries sont connectés à un chargeur de batteries.

4. Le procédé de fonctionnement d'une station de service autonome pour UAV destinée à supporter l'infrastructure de vols autonomes BVLOS, ledit procédé étant mis en œuvre sur une station de service autonome selon quelconque des revendications 1 à 3, comprenant les étapes suivantes:
- l'UAV atterrit sur le module mécanique d'atterrissage et de décollage à guidage automatique (2) situé au niveau supérieur (5) de la structure squelettique à plusieurs étages (1);
- le premier module actionneur d'extension et de rétraction horizontal (3) extrait la batterie de l'UAV et la dépose à l'étage libre de l'ascenseur (6);
- l'étage de l'ascenseur (6) portant une nouvelle batterie est levé au niveau correspondant de l'UAV;
- le premier module actionneur d'extension et de rétraction horizontal (3) insère la nouvelle batterie dans l'UAV;
- le second module actionneur d'extension et de rétraction horizontal (3) insère l'objet de charge utile (payload) dans l'UAV;
- les mécanismes de verrouillage de l'UAV sont activés;
- l'ascenseur (6) redescend à son niveau d'origine et l'UAV décolle.
